(19) Europäisches Patentamt
European Patent Office
Office européen des brevets

(11) **EP 3 179 643 A1**

(12) **EUROPEAN PATENT APPLICATION**
published in accordance with Art. 153(4) EPC

(43) Date of publication:
**14.06.2017 Bulletin 2017/24**

(51) Int Cl.:
***H04B 7/06*** (2006.01)

(21) Application number: **14899469.2**

(86) International application number:
**PCT/CN2014/084022**

(22) Date of filing: **08.08.2014**

(87) International publication number:
**WO 2016/019585 (11.02.2016 Gazette 2016/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**92100 Boulogne-Billancourt (FR)**

(72) Inventors:
• **LI, Xun**
**Shanghai 201206 (CN)**
• **LUO, Qinglin**
**Shanghai 201206 (CN)**

(74) Representative: **DREISS Patentanwälte PartG mbB**
**Friedrichstrasse 6**
**70174 Stuttgart (DE)**

(54) **CODEBOOK, AND METHOD AND DEVICE FOR GENERATING PRECODER BASED ON SAME**

(57) The present disclosure provides a method and apparatus for generating a codebook for wireless communication, a method and apparatus for generating a precoder for a 3D channel using the codebook in a base station in wireless communication, and a method and apparatus for facilitating generation of a precoder for the codebook in a user equipment in wireless communication. Compared with the prior art, the codebook provided by the present disclosure may be utilized for both horizontal beamforming and vertical beamforming. Compared with traditional precoders, the precoder provided by the present disclosure may control azimuth and down-tilt angles of beams. Compared with the prior art, the present disclosure enhances system performance by exploiting vertical spatial gain of the 3D channel.

Fig. 4

**Description**

**FIELD OF THE INVENTION**

The present disclosure relates to the field of wireless communication, and particularly to a codebook and a precoder for wireless communication.

**BACKGROUND OF THE INVENTION**

Two-dimensional (2D) transmission has been widely studied and adopted in LTE systems. Traditional antenna arrays are horizontally arranged to form a beam in a horizontal plane. In order to leverage more spatial gains of a three-dimensional (3D) space, a 3D multi-in multi-out (MIMO) channel propagation modeling was discussed and modeled in recent 3GPP meetings. In a 3D MIMO channel, a uniform panel array (UPA) antenna will be adopted to obtain a vertical spatial gain. However, traditional 2D codebooks and channel information feedback mechanisms only consider and support horizontal beamforming. In order to enhance system performance by utilizing the vertical spatial gain, a 3D MIMO channel-based codebook and a 3D precoding matrix index feedback mechanism become imminent issues to address.

**SUMMARY OF THE INVENTION**

Objectives of the present disclosure is to provide a method and apparatus for generating a codebook for wireless communication, a method and apparatus for generating a precoder for a 3D channel using the codebook in a base station in wireless communication, and a method and apparatus for facilitating generation of a precoder for the codebook in a user equipment in wireless communication.

According to a first aspect of the present disclosure, there is provided a method for generating a codebook for wireless communication, wherein the codebook includes a first codebook and a second codebook, the method comprising:

**[0005]** - determining a first codebook ($V_V$) according to an equation below:

$$V_V = \left\{ \mathbf{V}_V^{(l)} : 1 \leq l \leq L \right\},$$

wherein

$$\mathbf{V}_V^{(l)} = \begin{bmatrix} \beta_1 \mathbf{z}_l & & \mathbf{0} \\ & \ddots & \\ \mathbf{0} & & \beta_M \mathbf{z}_l \end{bmatrix}, \beta_m \in [0, 2\pi),$$

and wherein $L$ denotes the number of codewords in the first codebook ($V_V$), $M$ denotes the number of horizontal antenna ports, $N$ denotes the number of vertical antenna ports, $\mathbf{z}_l$ denotes the $l^{th}$ column in any existing codebook $Z$ for wireless communication, the size of $Z$ being $N$ rows and $L$ columns;

- determining a second codebook ($V_H$) according to the equation below:

$$V_H = \left\{ \mathbf{V}_H^{(k)} : 1 \leq k \leq K \right\},$$

wherein,

$$\mathbf{V}_H^{(k)} = \begin{bmatrix} \mathbf{X}^{(k)} & \mathbf{0} \\ \mathbf{0} & \mathbf{X}^{(k)} \end{bmatrix},$$

$$\mathbf{X}^{(k)} = \begin{bmatrix} \mathbf{b}_{k \bmod K} & \mathbf{b}_{(k+1)\bmod K} & \cdots & \mathbf{b}_{(k+P-1)\bmod K} \end{bmatrix},$$

and wherein K denotes the number of codewords in the second codebook ($\mathbf{V}_H$), $M$ denotes the number of horizontal antenna ports, $P$ denotes the number of columns of matrix $X$, and $\mathbf{b}_k$ denotes the $k^{th}$ column of matrix B, wherein the matrix $B$ is:

$$[\mathbf{B}]_{m,k} = e^{j2\pi\frac{(m-1)(k-1)}{K}}, \ m=1, \ldots, M/2; \ k=1, \ldots, K.$$

According to another aspect of the present disclosure, there is provided a method of generating a precoder for a 3D channel in a base station in wireless communication, characterized by performing steps below using a codebook generated by the method above:

- selecting a first codeword ($\mathbf{V}_V$) and a second codeword ($\mathbf{V}_H$) suitable for the 3D channel from a first codebook and a second codebook based on channel information of the 3D channel, respectively;
- generating a precoder (T) for the 3D channel based on a product of the first codeword ($\mathbf{V}_V$) and the second codeword ($\mathbf{V}_H$).

According to a further aspect of the present disclosure, there is provided a method of facilitating generation of a precoder in a user equipment in wireless communication, characterized by performing steps below using a codebook generated by the method above:

- selecting, based on channel information, a first codeword ($\mathbf{V}_V$) and/or a second codeword ($\mathbf{V}_H$) suitable for the channel from a first codebook and/or a second codebook, respectively;
- transmitting precoding matrix index information to a base station, the precoding matrix index information including a first precoding matrix index indicating a selected first codeword ($\mathbf{V}_V$) and/or a second precoding matrix index indicating a selected second codeword ($\mathbf{V}_H$).

According to a still further aspect of the present disclosure, there is provided an apparatus for generating a codebook for wireless communication, wherein the codebook includes a first codebook and a second codebook, the apparatus comprising:

- a module configured to determine a first codebook ($\mathbf{V}_V$) according to the equation below:

$$\mathbf{V}_V = \left\{ \mathbf{V}_V^{(l)} : 1 \le l \le L \right\},$$

wherein

$$\mathbf{V}_V^{(l)} = \begin{bmatrix} \beta_1 \mathbf{z}_l & & \mathbf{0} \\ & \ddots & \\ \mathbf{0} & & \beta_M \mathbf{z}_l \end{bmatrix}, \beta_m \in [0, 2\pi),$$

and wherein $L$ denotes the number of codewords in the first codebook ($\mathbf{V}_V$), $M$ denotes the number of horizontal antenna ports, $N$ denotes the number of vertical antenna ports, $Z_l$ denotes the $l^{th}$ column in any existing codebook *Z* for wireless communication, the size of *Z* being *N* rows and *L* columns;

- a module configured to determine a second codebook ( $V_H$ ) according to the equation below:

$$\mathbf{V}_H = \left\{ \mathbf{V}_H^{(k)} : 1 \le k \le K \right\},$$

wherein,

$$\mathbf{V}_H^{(k)} = \begin{bmatrix} \mathbf{X}^{(k)} & \mathbf{0} \\ \mathbf{0} & \mathbf{X}^{(k)} \end{bmatrix},$$

$$\mathbf{X}^{(k)} = \begin{bmatrix} \mathbf{b}_{k \bmod K} & \mathbf{b}_{(k+1) \bmod K} & \cdots & \mathbf{b}_{(k+P-1) \bmod K} \end{bmatrix},$$

and wherein *K* denotes the number of codewords in the second codebook ( $V_H$ ), *M* denotes the number of horizontal antenna ports, *P* denotes the number of columns of matrix *X*, and $\mathbf{b}_k$ denotes the $k^{th}$ column of matrix B, wherein the matrix *B* is:

$$\left[ \mathbf{B} \right]_{m,k} = e^{j2\pi \frac{(m-1)(k-1)}{K}}, \ m=1, ..., M/2; \ k=1, ..., K.$$

According to yet further aspect of the present disclosure, there is provided an apparatus for generating a precoder for a 3D channel in a base station in wireless communication, characterized in that using a codebook generated by the method above, the apparatus comprises:

- a module configured to select a first codeword ($V_V$) and a second codeword ($\mathbf{V}_H$) suitable for the 3D channel from a first codebook and a second codebook based on channel information of the 3D channel, respectively;
- a module configured to generate a precoder (T) for the 3D channel based on a product of the first codeword ($\mathbf{V}_V$) and the second codeword ($\mathbf{V}_H$).

According to a still yet aspect of the present disclosure, there is provided an apparatus for facilitating generation of a precoder in a user equipment for wireless communication, characterized in that using the codebook generated by the method above, the apparatus comprises:

- a module configured to select, based on channel information, a first codeword ($V_V$) and/or a second codeword ($\mathbf{V}_H$) suitable for the channel from a first codebook and/or a second codebook, respectively;
- a module configured to transmit precoding matrix index information to a base station, the precoding matrix index information including a first precoding matrix index indicating a selected first codeword ($\mathbf{V}_V$) and/or a second precoding matrix index indicating a selected second codeword ($\mathbf{V}_H$).

Compared with the prior art, the codebook provided by the present disclosure may be utilized for both horizontal beamforming and vertical beamforming; with the codebook, the base station may generate a precoder for a 3D channel. Compared with traditional precoders, the precoder provided by the present disclosure may control azimuth and downtilt angles of beams. Besides, for the codebook, the user equipment may transmit a first precoding matrix index for indicating the beam downtilt angle and/or a second precoding matrix index for indicating the beam azimuth angle to the base station. Compared with the prior art, the present disclosure enhances system performance by exploiting vertical spatial gain of the 3D channel.

## BRIEF DESCRIPTION OF THE PREFERRED EMBODIMENTS

Through reading detailed depiction of the non-limiting embodiments with reference to the accompanying drawings, other features, objectives, and advantages of the present disclosure will become more apparent:

Fig. 1 illustrates a schematic diagram of beamforming based on a 3D channel;
Fig. 2 illustrates a schematic diagram of a uniform panel array antenna for a 3D channel;
Fig. 3 illustrates a flow diagram of a method of generating a codebook for wireless communication according to an embodiment of one aspect of the present disclosure;
Fig. 4 illustrates a flow diagram of a method of generating a precoder for a 3D channel using the codebook mentioned above in a base station in wireless communication according to an embodiment of another aspect of the present disclosure;
Fig. 5 illustrates a flow diagram of a method of facilitating generation of a precoder for the codebook mentioned above in a user equipment in wireless communication according to an embodiment of a further aspect of the present disclosure;
Fig. 6 illustrates a schematic diagram of an apparatus for generating a codebook for wireless communication according to an embodiment of a still further aspect of the present disclosure;
Fig. 7 illustrates a schematic diagram of an apparatus for generating a precoder for a 3D channel using the codebook mentioned above in a base station in wireless communication according to an embodiment of a yet further aspect of the present disclosure;
Fig. 8 illustrates a schematic diagram of an apparatus for facilitating generation of a precoder for the codebook mentioned above in a user equipment in wireless communication according to an embodiment of a still yet further aspect of the present disclosure.

Same or similar reference documents in the drawings represent same or similar components.

## DETAILED DESCRIPTION OF THE PREFERRED EMBODIMENTS

Hereinafter, the present disclosure will be described in further detail with reference to the accompanying drawings.

The wireless communication as described herein includes a communication way through radio signals based on a GSM, 3GPP protocol, wherein a wireless communication network includes a communication network based on a 3PP, GSM protocol. The wireless communication network generally includes a plurality of base stations each providing a wireless coverage for the cell where it is located, and a plurality of user equipments (UEs) each of which may move intra-cell or inter-cells. The base station includes, but not limited to, NodeB and eNodeB. Each cell may be deployed with one base station. Each base station may comprise a plurality of sectors. An interface for transmitting subscriber traffics or control traffics may be utilized for mutual communication between base stations. A base station may directly or indirectly communicate with respective UEs. Respective UEs may be any electronic device that can directly or indirectly communicate with the base station in a wireless manner, including, but not limited to: a mobile phone, a PDA, and etc. Besides, as a preferable manner, each base station in the wireless communication network has a plurality of antennas, and each UE also has a plurality of antennas. Furthermore, the UEs may be distributed on different vertical heights. Therefore, the UEs and the base stations may constitute a 3D channel-based wireless communication system. Preferably, respective UEs and base stations in the wireless communication network may transmit and receive information in a time-division duplexing mode (TDD mode) or in a frequency-division duplexing mode (FDD mode). Those skilled in the art should understand that the wireless communication technology and the modes for respective UEs and base stations to transmit and receive information are not limited to the above, and other existing or future possibly emerging wireless communication technologies and modes of transmitting and receiving information, if applicable to the present disclosure, should also be included within the protection scope of the present disclosure, which are incorporated here by reference.

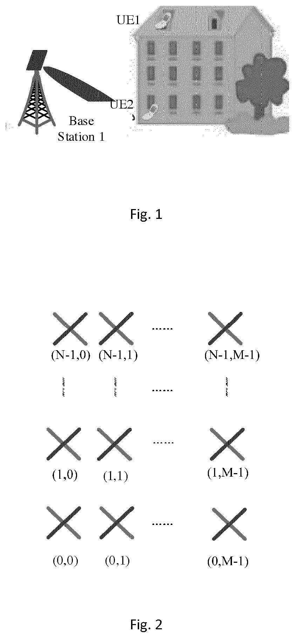

Fig. 1 illustrates a schematic diagram of beamforming based on a 3D channel. As illustrated in the figure, a base station 1 uses an antenna array to form beams pointed to UE 1 and UE 2, respectively. Because UE 1 and UE 2 are located in different vertical heights, respectively, the two beams pointed to the UEs on different vertical heights are required to have different azimuth angles as well as different downtilt angles, i.e., a 3D channel beamforming needs to support beamforming in both horizontal direction and vertical direction. However, existing 2D codebooks only support beamforming in horizontal direction, but cannot fulfill concurrent beamforming in both horizontal and vertical directions. Besides, with increase of the number of antenna ports, a 2D codebook designed according to the structures in prior art will become overlarge, which will also cause an overlarge overhead when the UEs feed back precoding matrix indexes, thereby dampening system performance.

Fig. 2 illustrates a schematic diagram of a uniform panel array antenna for a 3D channel. As illustrated in the figure, the uniform panel array antenna for a 3D channel consists of antenna elements of $N$ rows and $M$ columns. Suppose each antenna element is an antenna port, then the uniform panel array has $N \times M$ antenna ports. And antenna elements in each column of the array antenna, due to including $N$ antenna elements, are referred to as $N$ vertical antenna ports.

And antenna elements in each row of the antenna array, due to including $M$ antenna elements, are referred to as $M$ horizontal antenna ports.

The present disclosure may be applicable to various forms of antennas such as polarized antennas and non-polarized antennas. To simplify the depiction, in the embodiments below, a base station will perform signal transmission using a uniform panel array antenna having $N \times M$ antenna ports. Those skilled in the art should understand that the uniform panel array antenna here is only exemplary, not limitative, and any antenna, if applicable to the present disclosure, should also be included within the protection scope of the present disclosure, which is incorporated here by reference.

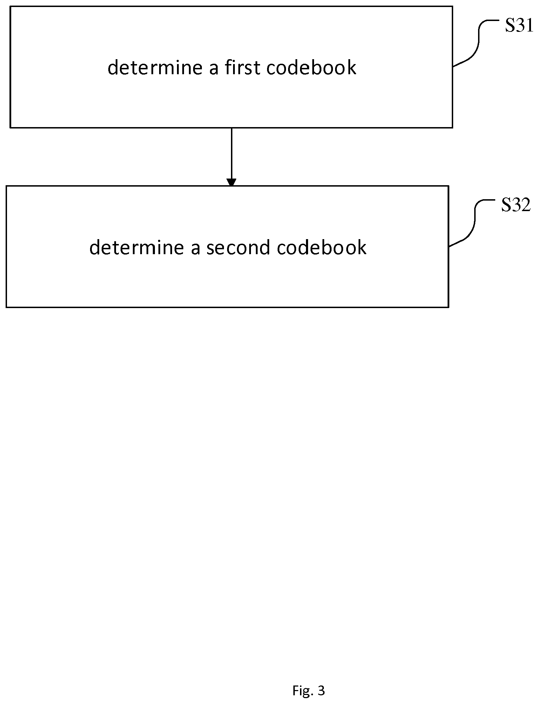

Fig. 3 illustrates a flow diagram of a method of generating a codebook for wireless communication according to an embodiment of one aspect of the present disclosure, wherein the codebook includes a first codebook and a second codebook.

Again, to clarify the depiction, the uniform panel array antenna with $N \times M$ antenna ports will be referenced for depiction.

First, in step S31, a first codebook ($\mathbf{V}_V$) is determined according to an equation below: wherein,

$$\mathbf{V}_V = \left\{ \mathbf{V}_V^{(l)} : 1 \leq l \leq L \right\} \quad (1)$$

$$\mathbf{V}_V^{(l)} = \begin{bmatrix} \beta_1 \mathbf{z}_l & & \mathbf{0} \\ & \ddots & \\ \mathbf{0} & & \beta_M \mathbf{z}_l \end{bmatrix}, \beta_m \in [0, 2\pi), \quad (2)$$

and wherein $L$ denotes the number of codewords in the first codebook ($\mathbf{V}_V$), $M$ denotes the number of horizontal antenna ports, $N$ denotes the number of vertical antenna ports, $\mathbf{z}_l$ denotes the $l^{th}$ column in any existing codebook $Z$ for wireless communication, the size of $Z$ being $N$ rows and $L$ columns.

Herein, $\beta_m$ ($1 \leq m \leq M$) is a co-phasing quantization factor, which quantizes the phase difference between respective columns.

The codebook $Z$ may be any codebook for wireless communication in prior art. Hereinafter, the codebook $Z$ will be illustrated with DFT (Discrete Fourier Transformation) matrix as an example, wherein the codebook $Z$ has $N$ rows and $L$ columns. Each column in the codebook $Z$ may be expressed below:

$$\mathbf{z}_l = \begin{bmatrix} 1 & e^{j2\pi d \cos\theta_l / \lambda} & \cdots & e^{j2\pi d (N-1)\sin\theta_l / \lambda} \end{bmatrix}^T \quad (3)$$

where $l$ is the column index, $d$ is the antenna spacing, $\lambda$ is the wavelength of carrier frequency. Moreover, $\theta_l$ is downtilt angle, where $\theta_i \neq \theta_j$ ($i \neq j$).

It is seen that the size of codeword $\mathbf{V}_V$ in the first codebook is $[NM \times M]$, i.e., $\mathbf{V}_V$ is a matrix having $N \times M$ rows and $M$ columns, wherein $M$ denotes the number of horizontal antenna ports and $N$ denotes the number of vertical antenna ports.

Besides, $L$, the number of codewords contained in the first codebook ($\mathbf{V}_V$) may be adjusted according to actual system needs.

Next, in step S32, a second codebook ($\mathbf{V}_H$) is determined according to the equation below:

$$\mathbf{V}_H = \left\{ \mathbf{V}_H^{(k)} : 1 \leq k \leq K \right\}, \quad (4)$$

wherein,

$$\mathbf{V}_H{}^{(k)} = \begin{bmatrix} \mathbf{X}^{(k)} & \mathbf{0} \\ \mathbf{0} & \mathbf{X}^{(k)} \end{bmatrix}, \quad (5)$$

$$\mathbf{X}^{(k)} = \begin{bmatrix} \mathbf{b}_{k \bmod K} & \mathbf{b}_{(k+1)\bmod K} & \cdots & \mathbf{b}_{(k+P-1)\bmod K} \end{bmatrix}, \quad (6)$$

and wherein $K$ denotes the number of codewords in the second codebook ($\mathbf{V}_H$), $M$ denotes the number of horizontal antenna ports, $P$ denotes the number of columns of matrix $X$, and $\mathbf{b}_k$ denotes the $k^{th}$ column of matrix B, wherein the matrix $B$ is:

$$[\mathbf{B}]_{m,k} = e^{j2\pi \frac{(m-1)(k-1)}{K}}, \quad m=1, ..., M/2; \ k=1, ..., K. \quad (7)$$

It is seen from the foregoing that the size of codeword $\mathbf{V}_H$ in the second codebook is $[M \times 2P]$, i.e., $\mathbf{V}_H$ is a matrix of $M$ rows and $2P$ columns, wherein $M$ is the number of horizontal antenna ports.

In addition, the number $K$ of codewords included in the second codebook ($\mathbf{V}_H$) may be adjusted according to actual system needs.

In a preferred embodiment, besides the first codebook and the second codebook, the codebook for wireless communication also includes a third codebook ($V_S$).

In step S33 (not shown), the third codebook ($V_S$) is determined according to the equation below:

$$V_S = \left\{ \mathbf{V}_S^{(q)} = \frac{1}{\sqrt{2r}} \begin{bmatrix} \mathbf{Y}_1 & \mathbf{Y}r \\ \alpha_1 \mathbf{Y}_1 \cdots & \alpha_r \mathbf{Y}r \end{bmatrix} : 1 \le q \le Q, \alpha_i \in \{1, -1, j, -j\}, 1 \le i \le r \right\}, \quad (8)$$

wherein,

$$\mathbf{Y}_i \in \left\{ e_1^P \quad e_2^P \quad \cdots \quad e_P^P \right\}, \quad (9)$$

and wherein $Q$ denotes the number of codewords in the third codebook ($V_S$), $P$ is the number of columns of matrix $X$ used by the above mentioned second codebook, $r$ denotes the number of streams, $e_s^t$ denotes a vector having $t$ elements, wherein the $s^{th}$ elements is 1 while the remaining elements are 0.

It is seen from the foregoing that the size of codeword $\mathbf{V}_S$ in the third codebook is $[2P \times r]$, i.e., $\mathbf{V}_S$ is a matrix having $2P$ rows and $r$ columns, wherein $P$ denotes the number of columns of the matrix $X$ used by the above mentioned second codebook, and $r$ denotes the number of streams.

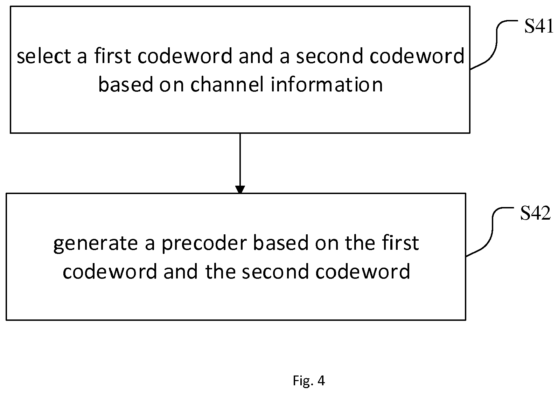

Fig. 4 illustrates a flow diagram of a method of generating a precoder for a 3D channel using the above mentioned codebook in a base station in wireless communication according to an embodiment of another aspect of the present disclosure.

In step S41, the base station selects a first codeword ($\mathbf{V}_V$) and a second codeword ($\mathbf{V}_H$) suitable for the 3D channel from a first codebook and a second codebook respectively based on the channel information of the 3D channel.

Here, the channel information may be obtained in different obtaining manners. For example, in a TDD network, by utilizing reciprocity between uplink and downlink channels, the base station may estimate uplink channel information from the UE to the base station as downlink channel information from the base station to the UE by obtaining a sounding signal transmitted by the UE, and the channel information may preferably be a channel matrix. For a 3D channel, the channel information may include vertical plane channel information and horizontal plane channel information. For another example, in an FDD network, the UE may estimate channel matrix, and select a codeword suitable for the channel from a codebook using the estimated channel matrix according to a certain selection criterion, e.g., a maximum throughput criterion, and reports the index value (PMI, Precoding Matrix Index) of the codeword in the codebook to the base station, such that the base station may use the obtained PMI as the channel information. Moreover, when the wireless communication system uses the codebook proposed by the present disclosure, the base station may receive precoding matrix index information from the UE, the precoding matrix index information including a first precoding matrix index (vPMI) indicating the selected first codeword ($\mathbf{V}_V$) and/or a second precoding matrix index (hPMI) indicating the selected second codeword ($\mathbf{V}_H$). Moreover, in a preferred embodiment, the precoding matrix index information as received by the base station from the UE also includes a third precoding matrix index (sPMI) indicating the selected third codeword ($\mathbf{V}_S$) from the UE.

In an embodiment, the base station receives respective precoding matrix index from the UE in a same subframe, wherein the precoding matrix indexes includes one or more of vPMI, hPMI, and sPMI mentioned above. Moreover, a frequency of receiving the precoding matrix indexes by the base station may be adjusted according to actual system needs.

In another embodiment, the base station receives respective precoding matrix index from the UE in a plurality of subframes, wherein the precoding matrix indexes include one or more of vPMI, hPMI, and sPMI mentioned above. Moreover, in each subframe of the plurality of subframes, the base station may receive one or more precoding matrix indexes. For example, the base station may receive vPMI in the $n^{th}$ subframe, and receive hPMI and sPMI in the $m^{th}$ subframe. For another example, the base station may receive the vPMI, hPMI, and sPMI in three different subframes, respectively. In addition, the frequency of receiving respective precoding matrix index by the base station may be identical or different. For example, hPMI may be received by the base station more frequently than vPMI. For another example, because the third codeword is used for reflecting short-term channel information, while the first and second codewords are used for reflecting long-term channel information, sPMI may be received by the base station more frequently than vPMI and hPMI. Further, the receiving frequencies of respective precoding matrix index may be adjusted according to actual system needs.

Those skilled in the art should understand that the depictions regarding the channel information and the manners of obtaining the channel information are only exemplary, not limitative. There exist various kinds of other implementations without departing from the spirit or scope of the present disclosure, which are incorporated here by reference.

Next, based on the channel information of the 3D channel, the base station selects a first codeword ($\mathbf{V}_V$) and a second codeword ($\mathbf{V}_H$) suitable for the 3D channel from the first codebook and the second codebook, respectively.

In an embodiment, when the 3D channel information is for example a channel matrix, the base station selects a first codeword ($\mathbf{V}_V$) suitable for the 3D channel based on the vertical plane channel information included in the channel matrix according to for example a maximum throughput criterion, the first codeword being referred to as a vertical precoding matrix for controlling a downtilt angle of a formed beam. Moreover, the base station selects a second codeword ($\mathbf{V}_H$) suitable for the 3D channel from the second codebook based on the horizontal plane channel information included in the 3D channel information according to for example a maximum throughput criterion, such that the second codeword may indicate an azimuth angle of the formed beam. In this way, a set of beams may be formed based on the selected first codeword ($\mathbf{V}_V$) and the second codeword ($\mathbf{V}_H$), the set of beams having the down-tile angle indicated by $\mathbf{V}_V$ and the azimuth angle indicated by $\mathbf{V}_H$.

In another embodiment, the channel information is precoding matrix index information reported by a UE, and the wireless communication system uses the codebook provided by the present disclosure. Therefore, as mentioned above, the precoding matrix index information obtained by the base station may include a first precoding matrix index (vPMI) indicating the first codeword ($\mathbf{V}_V$) selected by the UE and/or a second precoding matrix index (hPMI) indicating the second codeword ($\mathbf{V}_H$) selected by the UE. The base station selects corresponding codewords as the first codeword ($\mathbf{V}_V$) and the second codeword ($\mathbf{V}_H$) suitable for the 3D channel from the first code codebook and the second codebook based on the vPMI and the hPMI, respectively. The first codeword ($\mathbf{V}_V$) may indicate the downtilt angle of the formed beam, and the second codeword ($\mathbf{V}_H$) may indicate the azimuth angle of the formed beam. In this way, a set of beams may be formed based on the selected first codeword ($\mathbf{V}_V$) and the second codeword ($\mathbf{V}_H$), the set of beams having the downtilt angle indicated by $\mathbf{V}_V$ and the azimuth angle indicated by $\mathbf{V}_H$.

In addition, in another embodiment, the base station may select corresponding codewords as the first codeword and the second codeword suitable for the 3D channel from the first codebook and the second codebook respectively, in conjunction with the estimated channel matrix and the precoding matrix index information reported by the UE. For example, when the precoding matrix index information reported by the UE only includes hMPI, the base station selects the second codeword from the second codebook based on hPMI, and the base station selects the first codeword from the first codebook based on the estimated channel matrix according to the method mentioned above. In addition, when the precoding matrix index information reported by the UE includes vPMI and hPMI, the base station may still select corresponding codewords from the first codebook and the second codebook based on the channel matrix with reference to the vPMI and hPMI.

Next, in step S42, the base station generates a precoder (T) for the 3D channel based on the product of the first codeword ($\mathbf{V}_V$) and the second codeword ($\mathbf{V}_H$). Specifically, the base station first multiples $\mathbf{V}_V$ by $\mathbf{V}_H$. As mentioned above, the size of the first codeword ($\mathbf{V}_V$) is [$NM \times M$] and the size of the second codeword ($\mathbf{V}_H$) is [$M \times 2P$], wherein $N$ denotes the number of vertical antenna ports, $M$ denotes the number of horizontal antenna ports, and $P$ denotes the number of columns of matrix X used by the second codebook. Therefore, the product of $\mathbf{V}_V$ and $\mathbf{V}_H$ is $\mathbf{V}_V\mathbf{V}_H$, with a size

of [$NM \times 2P$], i.e., a matrix having $N \times M$ rows and $2P$ columns. Then, the base station selects r columns from $\mathbf{V}_V\mathbf{V}_H$ as the precoder (T), where r denotes the number of streams. In one embodiment, the base station may select r columns as the precoder (T) from the $2P$ columns according to for example a maximum throughput criterion. In another embodiment, the base station may multiply $\mathbf{V}_V\mathbf{V}_H$ by a predetermined fixed codeword that is a matrix having $2P$ rows and r columns, thereby selecting r columns in $\mathbf{V}_V\mathbf{V}_H$ as the precoder (T). Because the first codeword ($\mathbf{V}_V$) may indicate the downtilt angle of the formed beam, and the second codeword ($\mathbf{V}_H$) may indicate the azimuth angle of the formed beam, a set of beams may be formed based on the generated precoder (T), the set of beams having the down-tile angle indicated by $\mathbf{V}_V$ and the azimuth angle indicated by $\mathbf{V}_H$ .

In a preferred embodiment, after having selected the first codeword ($\mathbf{V}_V$) and the second codeword ($\mathbf{V}_H$) according to the method above, the base station may further select a third codeword ($\mathbf{V}_S$) suitable for the 3D channel from a third codebook based on the channel information and the number of streams corresponding to the channel. And then the base station generates a precoder (T) for the 3D channel based on a product of $\mathbf{V}_V$ , $\mathbf{V}_H$ , and $\mathbf{V}_S$ . In an embodiment, when the channel information is a channel matrix, the base station selects the third codeword ($\mathbf{V}_S$) suitable for the 3D channel from the third codebook based on the channel matrix and the number of streams corresponding to the channel according to for example a maximum throughput criterion. As mentioned above, the size of $\mathbf{V}_S$ is [$2P \times r$] , wherein $P$ is the number of columns of the matrix X used by the second codebook, and r is the number of streams. In another embodiment, when the precoding matrix index information reported by the UE includes the third precoding matrix index (sPMI) indicating the third codeword ($\mathbf{V}_S$) selected by the UE, the base station selects a corresponding codeword as the third codeword $\mathbf{V}_S$ suitable for the 3D channel from the third codebook according to sPMI.

Next, the base station generates a precoder (T) for the 3D channel based on a product of $\mathbf{V}_V$ , $\mathbf{V}_H$ , and $\mathbf{V}_S$ . Specifically, the base station first multiplies $\mathbf{V}_V$ by $\mathbf{V}_H$, resulting in $\mathbf{V}_V\mathbf{V}_H$ with a size of [$NM \times 2P$], as mentioned above. Then, the base station multiplies $\mathbf{V}_V\mathbf{V}_H$ by $\mathbf{V}_S$, resulting in $\mathbf{V}_V\mathbf{V}_H\mathbf{V}_S$ with a size *of* [$NM \times r$] because the value of $\mathbf{V}_S$ is [$2P \times r$], where r denotes the number of streams. The base station uses $\mathbf{V}_V\mathbf{V}_H\mathbf{V}_S$ as the precoder (T), which is a matrix having $N \times M$ rows and r columns. Because the first codeword ($\mathbf{V}_V$) may indicate the downtilt angle of the formed beam, and the second codeword ($\mathbf{V}_H$) may indicate an azimuth angle of the formed beam, a set of beams may be formed based on the generated precoder (T), the set of beams having the downtilt angle indicated by $\mathbf{V}_V$ and the azimuth angle indicated by $\mathbf{V}_H$.

In another embodiment, the base station may generate a precoder for a 2D channel using the codebook provided by the present disclosure. Particularly, the base station may select a second codeword $\mathbf{V}_H$ of a size of [$M \times 2P$] from the second codebook according to the manner mentioned above based on the horizontal plane channel information or hPMI,and then uses the r column therein as the precoder (T) for the 2D channel according to for example a maximum throughput criterion. In another example, the base station may select the second codeword $\mathbf{V}_H$ from the second codebook based on the horizontal plane channel information or hPMI and select the third codeword $\mathbf{V}_S$ of a size of [$2P \times r$] from the third codeword according to the manner mentioned above, and then multiplies $\mathbf{V}_H$ by $\mathbf{V}_S$ to obtain $\mathbf{V}_H\mathbf{V}_S$ with a size of [$M \times r$] as the precoder (T) for the 2D channel. It is seen that the codebook provided by the present disclosure may also be applied to traditional 2D channels besides to the 3D channels.

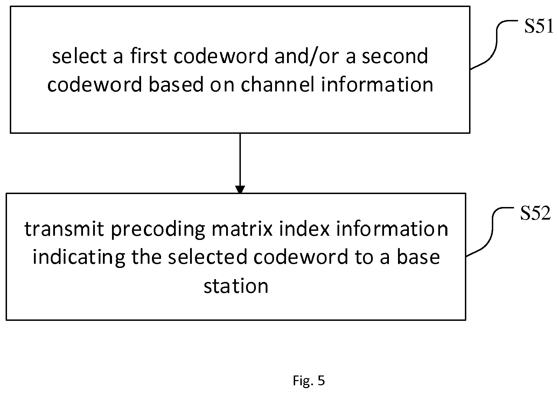

Fig. 5 illustrates a flow diagram of a method of facilitating generation of a precoder using the codebook mentioned above in a UE in wireless communication according to an embodiment of a further aspect of the present disclosure.

In step S51, the UE selects, based on channel information, a first codeword ($\mathbf{V}_V$) and/or a second codeword ($\mathbf{V}_H$) suitable for the channel from a first codebook and/or a second codebook, respectively. Specifically, the UE may perform channel estimation according to a received reference signal so as to derive a channel matrix, and then selects the codewords suitable for the channel from the codebooks based on the channel matrix according to a certain selection criterion.

In one embodiment, the UE is configured with a reference signal for a vertical antenna port; then the UE may estimate the vertical plane channel matrix based on the reference signal and selects the first codeword ($\mathbf{V}_V$) suitable for the channel from the first codebook according to for example a maximum throughput criterion. The first codeword ($\mathbf{V}_V$) may be used to indicate a downtilt angle of a beam pointed to the UE.

In another embodiment, the UE is configured with a reference signal for a horizontal antenna port; then the UE estimates the horizontal plane channel matrix based on the reference signal, and selects a second codeword ($\mathbf{V}_H$) suitable for the channel from the second codebook according to for example a maximum throughput principle. The second codeword ($\mathbf{V}_H$) may be used to indicate the azimuth angle of the beam pointed to the UE.

In a further embodiment, the UE is configured with two sets of reference signals for a vertical antenna port and a horizontal antenna port, respectively; then the UE may estimate the vertical plane channel matrix and the horizontal plane channel matrix based on the two sets of reference signals, respectively, and then select the first codeword ($\mathbf{V}_V$) suitable for the channel from the first codebook and select the second codeword ($\mathbf{V}_H$) suitable for the channel from the second codebook according to for example a maximum throughput criterion. Moreover, the first codeword ($\mathbf{V}_V$) may indicate the downtilt angle of the beam pointed to the UE, and the second codeword ($\mathbf{V}_H$) may indicate the azimuth angle of the beam pointed to the UE.

In one preferred embodiment, the UE may further select a third codeword ($\mathbf{V}_S$) suitable for the channel from the third codebook based on channel information and the number of streams corresponding to the channel. For example, the UE obtains a vertical plane channel matrix and/or a horizontal plane channel matrix based on the reference signals for the vertical antenna port and/or the horizontal antenna port. Then, the UE selects the third codeword ($\mathbf{V}_S$) suitable for the channel from the third codebook based on the channel matrix and the number of streams corresponding to the channel according to for example a maximum throughput criterion.

Then, in step S52, the UE transmits precoding matrix index information to a base station, the precoding matrix index information including a first precoding matrix index information (vPMI) indicating the selected first codeword ($\mathbf{V}_V$) and/or a second precoding matrix index information (hPMI) indicating the selected second codeword ($\mathbf{V}_H$). Moreover, in one preferred embodiment, the precoding matrix index information transmitted by the UE to the base station further includes a third precoding matrix index information (sPMI) indicating the selected third codeword ($\mathbf{V}_S$).

In one embodiment, the UE transmits, to the base station, respective precoding matrix index information indicating respective selected codeword in the same subframe. Particularly, the respective precoding matrix index information may include one or more of the vPMI, hPMI, and sMPI; moreover, the frequency of transmitting the precoding matrix index by the UE may be adjusted according to actual system needs.

In another embodiment, the UE transmits, to the base station, respective precoding matrix index information of respective selected codeword in a plurality of subframes. Particularly, the respective precoding matrix index information may include one or more of the vPMI, hPMI, and sMPI mentioned above. Moreover, in each subframe of the plurality of subframes, the UE may transmit one or more precoding matrix index information. For example, the UE may transmit vPMI in the $n^{th}$ subframe, and transmit hPMI and sPMI in the $m^{th}$ subframe. For another example, the UE may transmit vPMI, hPMI, and sPMI in three different subframes, respectively. Moreover, in a preferred embodiment, the UE may transmit respective precoding matrix index with the same frequency or with different frequencies. For example, hPMI may be transmitted more frequently by the UE. For another example, because the third codeword is for reflecting short-term channel information while the first and second codewords are for reflecting long-term channel information, sPMI may be transmitted more frequently by the UE than vPMI and hPMI. Frequencies of transmitting respective precoding matrix index may be adjusted according to actual system needs.

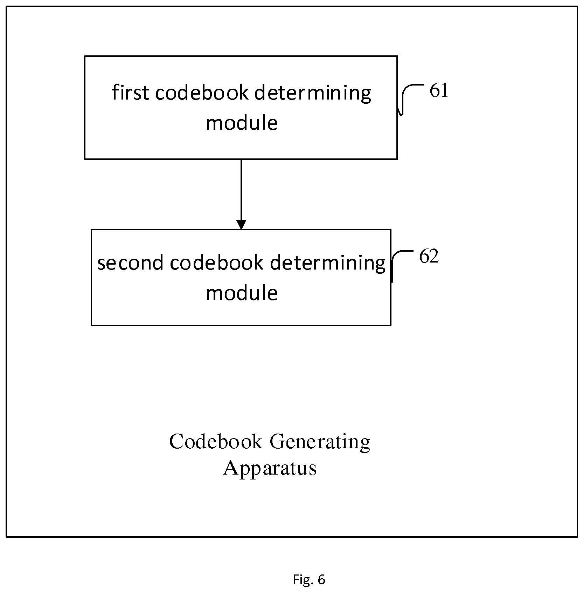

Fig. 6 illustrates a schematic diagram of an apparatus for generating a codebook for wireless communication according to an embodiment of a still further aspect of the present disclosure, wherein the codebook including a first codebook and a second codebook.

Again, to clarify the depiction, the uniform panel array antenna with $N \times M$ antenna ports will be referenced for depiction.

First, a module 61 configured to determine a first codebook (hereinafter referred to as a first codebook determining module 61) determines a first codebook ($\mathbf{V}_{\!\not\!V}$) according to an equation below:

$$\mathbf{V}_{\!\not\!V} = \left\{ \mathbf{V}_V^{(l)} : 1 \leq l \leq L \right\} \quad (1)$$

wherein,

$$\mathbf{V}_V^{(l)} = \begin{bmatrix} \beta_1 \mathbf{z}_l & & \mathbf{0} \\ & \ddots & \\ \mathbf{0} & & \beta_M \mathbf{z}_l \end{bmatrix}, \beta_m \in [0, 2\pi), \quad (2)$$

and wherein $L$ denotes the number of codewords in the first codebook ($\mathbf{V}_{\!\not\!V}$), $M$ denotes the number of horizontal antenna ports, $N$ denotes the number of vertical antenna ports, $Z_l$ denotes the $l^{th}$ column in any existing codebook $Z$ for wireless communication, the size of Z being N rows and L columns.

Herein, $\beta_m$ ($1 \leq m \leq M$) is a co-phasing quantization factor, which quantizes the phase difference between respective columns.

The codebook $Z$ may be any codebook for wireless communication in prior art. Hereinafter, the codebook $Z$ will be illustrated with DFT (Discrete Fourier Transformation) matrix as an example, wherein the codebook $Z$ has $N$ rows and $L$ columns. Each column in the codebook $Z$ may be expressed below:

$$\mathbf{z}_l = \begin{bmatrix} 1 & e^{j2\pi d \cos\theta_l/\lambda} & \cdots & e^{j2\pi d(N-1)\sin\theta_l/\lambda} \end{bmatrix}^T \qquad (3)$$

where $l$ is the column index, $d$ is the antenna spacing, $\lambda$ is the wavelength of carrier frequency. Moreover, $\theta_l$ is downtilt angle, where $\theta_i \neq \theta_j$ ($i \neq j$).

It is seen that the size of codeword $\mathbf{V}_V$ in the first codebook is [$NM \times M$], i.e., $\mathbf{V}_V$ is a matrix having $N \times M$ rows and $M$ columns, wherein $M$ denotes the number of horizontal antenna ports and $N$ denotes the number of vertical antenna ports.

Besides, $L$, the number of codewords contained in the first codebook ($\mathrm{V}_V$) may be adjusted according to actual system needs.

Next, a module 62 configured to determine a second codebook (hereinafter referred to as a second codebook determining module 62) determines a second codebook ($\mathrm{V}_H$) according to the equation below:

$$\mathbf{V}_H = \left\{ \mathbf{V}_H^{(k)} : 1 \leq k \leq K \right\}, \qquad (4)$$

wherein,

$$\mathbf{V}_H^{(k)} = \begin{bmatrix} \mathbf{X}^{(k)} & \mathbf{0} \\ \mathbf{0} & \mathbf{X}^{(k)} \end{bmatrix}, \qquad (5)$$

$$\mathbf{X}^{(k)} = \begin{bmatrix} \mathbf{b}_{k \bmod K} & \mathbf{b}_{(k+1) \bmod K} & \cdots & \mathbf{b}_{(k+P-1) \bmod K} \end{bmatrix}, \qquad (6)$$

and wherein $K$ denotes the number of codewords in the second codebook ($\mathrm{V}_H$), $M$ denotes the number of horizontal antenna ports, $P$ denotes the number of columns of matrix $X$, and $\mathbf{b}_k$ denotes the $k^{th}$ column of matrix B, wherein the matrix $B$ is:

$$[\mathbf{B}]_{m,k} = e^{j2\pi \frac{(m-1)(k-1)}{K}}, \quad m=1, ..., M/2; \ k=1, ..., K. \qquad (7)$$

It is seen from the foregoing that the size of codeword $\mathbf{V}_H$ in the second codebook is [$M \times 2p$], i.e., $\mathbf{V}_H$ is a matrix of $M$ rows and $2P$ columns, wherein $M$ is the number of horizontal antenna ports.

In addition, the number $K$ of codewords included in the second codebook ($\mathrm{V}_H$) may be adjusted according to actual system needs.

In a preferred embodiment, besides the first codebook and the second codebook, the codebook for wireless communication also includes a third codebook ($V_S$).

A module 63 (not shown) configured to determine a third codebook determines the third codebook ($V_S$) according to the equation below:

$$V_S = \left\{ \mathbf{V}_S^{(q)} = \frac{1}{\sqrt{2r}} \begin{bmatrix} \mathbf{Y}_1 & \mathbf{Y}r \\ \alpha_1\mathbf{Y}_1 & \cdots & \alpha_r\mathbf{Y}r \end{bmatrix} : 1 \leq q \leq Q, \alpha_i \in \{1, -1, j, -j\}, 1 \leq i \leq r \right\}, \qquad (8)$$

wherein,

$$\mathbf{Y}_i \in \left\{ e_1^P \quad e_2^P \quad \cdots \quad e_P^P \right\}, \quad (9)$$

and wherein $Q$ denotes the number of codewords in the third codebook ($V_S$), $P$ is the number of columns of matrix $X$ used by the above mentioned second codebook, $r$ denotes the number of streams, $e_s^t$ denotes a vector having t elements, wherein the $s^{th}$ elements is 1 while the remaining elements are 0.

It is seen from the foregoing that the size of codeword $\mathbf{V}_S$ in the third codebook is [$2P \times r$], i.e., $\mathbf{V}_S$ is a matrix having $2P$ rows and r columns, wherein $P$ denotes the number of columns of the matrix $X$ used by the above mentioned second codebook, and $r$ denotes the number of streams.

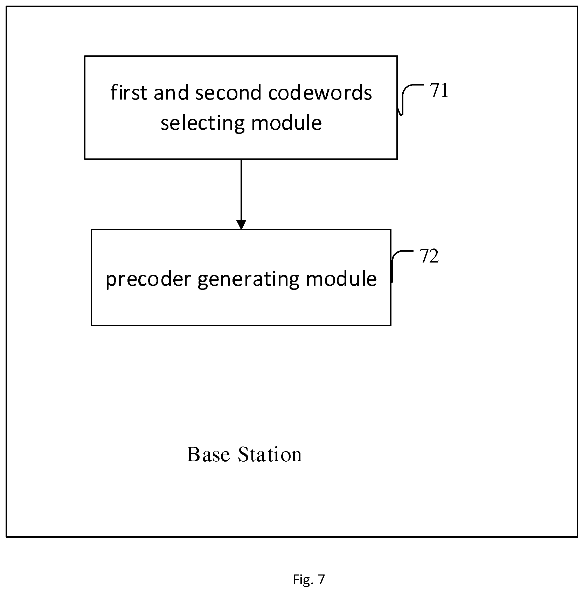

Fig. 7 illustrates a schematic diagram of an apparatus for generating a precoder for a 3D channel using the above mentioned codebook in a base station in wireless communication according to an embodiment of a yet further aspect of the present disclosure.

A module 71 configured to, select first codeword ($\mathbf{V}_V$) and a second codeword ($\mathbf{V}_H$) suitable for a 3D channel from a first codebook and a second codebook based on channel information of the 3D channel, respectively (hereinafter referred to as a first and second codewords selecting module 71) selects a first codeword ($\mathbf{V}_V$) and a second codeword ($\mathbf{V}_H$) suitable for the 3D channel from a first codebook and a second codebook respectively, based on the channel information of the 3D channel.

Here, the first and second codewords selecting module 71 may obtain the channel information in different obtaining manners. For example, in a TDD network, by utilizing reciprocity between uplink and downlink channels, the first and second codewords selecting module 71 may estimate uplink channel information from the UE to the base station as downlink channel information from the base station to the UE by obtaining a sounding signal transmitted by the UE, and the channel information may preferably be a channel matrix. For a 3D channel, the channel information may include vertical plane channel information and horizontal plane channel information. For another example, in an FDD network, the UE may estimate channel matrix, and select a codeword suitable for the channel from a codebook using the estimated channel matrix according to a certain selection criterion, e.g., a maximum throughput criterion, and reports the index value (PMI, Precoding Matrix Index) of the codeword in the codebook to the base station, such that the first and second codewords selecting module 71 may use the obtained PMI as the channel information. Moreover, when the wireless communication system uses the codebook proposed by the present disclosure, a module 73 (not shown) configured to receive precoding matrix index information from a UE (hereinafter referred to as a precoding matrix index information receiving module 73) may receive precoding matrix index information from the UE, the precoding matrix index information including a first precoding matrix index (vPMI) indicating the selected first codeword ($\mathbf{V}_V$) and/or a second precoding matrix index (hPMI) indicating the selected second codeword ($\mathbf{V}_H$). Moreover, in a preferred embodiment, the precoding matrix index information as received by the precoding matrix index information receiving module 73 from the UE also includes a third precoding matrix index (sPMI) indicating the selected third codeword ($\mathbf{V}_S$) from the UE.

In an embodiment, the precoding matrix index information receiving module 73 receives respective precoding matrix index from the UEs in a same subframe, wherein the precoding matrix indexes includes one or more of vPMI, hPMI,and sPMI mentioned above. Moreover, a frequency of receiving the precoding matrix indexes by the base station may be adjusted according to actual system needs.

In another embodiment, the precoding matrix index information receiving module 73 receives respective precoding matrix index from the UE in a plurality of subframes, wherein the precoding matrix indexes include one or more of vPMI, hPMI,and sPMI mentioned above. Moreover, in each subframe of the plurality of subframes, the base station may receive one or more precoding matrix indexes. For example, the precoding matrix index information receiving module 73 may receive vPMI in the $n^{th}$ subframe, and receive hPMI and sPMI in the $m^{th}$ subframe. For another example, the precoding matrix index information receiving module 73 may receive the vPMI, hPMI, and sPMI in three different subframes, respectively. In addition, the frequency of receiving the respective precoding matrix index by the precoding matrix index information receiving module 73 may be identical or different. For example, hPMI may be received by the base station more frequently than vPMI. For another example, because the third codeword is used for reflecting short-term channel information, while the first and second codewords are used for reflecting long-term channel information, sPMI may be received by the precoding matrix index information receiving module 73 more frequently than vPMI and hPMI. Further, the receiving frequencies of respective precoding matrix index may be adjusted according to actual system needs.

Those skilled in the art should understand that the depictions regarding the channel information and the manners of obtaining the channel information are only exemplary, not limitative. There exist various kinds of other implementations without departing from the spirit or scope of the present disclosure, which are incorporated here by reference.

Next, based on the channel information of the 3D channel, the first and second codewords selecting module 71 selects a first codeword ($\mathbf{V}_V$) and a second codeword ($\mathbf{V}_H$) suitable for the 3D channel from the first codebook and the second codebook, respectively.

In an embodiment, when the 3D channel information is for example a channel matrix, the first and second codewords selecting module 71 selects a first codeword ($\mathbf{V}_V$) suitable for the 3D channel based on the vertical plane channel information included in the channel matrix according to for example a maximum throughput criterion, the first codeword being referred to as a vertical precoding matrix for controlling a downtilt angle of a formed beam. Moreover, the first and second codewords selecting module 71 selects a second codeword ($\mathbf{V}_H$) suitable for the 3D channel from the second codebook based on the horizontal plane channel information included in the 3D channel information according to for example a maximum throughput criterion, such that the second codeword may indicate an azimuth angle of the formed beam. In this way, a set of beams may be formed based on the selected first codeword ($\mathbf{V}_V$) and the second codeword ($\mathbf{V}_H$), the set of beams having the down-tile angle indicated by $\mathbf{V}_V$ and the azimuth angle indicated by $\mathbf{V}_H$.

In another embodiment, the channel information is precoding matrix index information reported by a UE, and the wireless communication system uses the codebook provided by the present disclosure. Therefore, as mentioned above, the precoding matrix index information obtained by the precoding matrix index information receiving module 73 may include a first precoding matrix index (vPMI) indicating the first codeword ($\mathbf{V}_V$) selected by the UE and/or a second precoding matrix index (hPMI) indicating the second codeword ($\mathbf{V}_H$) selected by the UE. The first and second codewords selecting module 71 selects corresponding codewords as the first codeword ($\mathbf{V}_V$) and the second codeword ($\mathbf{V}_H$) suitable for the 3D channel from the first code codebook and the second codebook based on the vPMI and the hPMI, respectively. The first codeword ($\mathbf{V}_V$) may indicate the downtilt angle of the formed beam, and the second codeword ($\mathbf{V}_H$) may indicate the azimuth angle of the formed beam. In this way, a set of beams may be formed based on the selected first codeword ($\mathbf{V}_V$) and the second codeword ($\mathbf{V}_H$), the set of beams having the downtilt angle indicated by $\mathbf{V}_V$ and the azimuth angle indicated by $\mathbf{V}_H$.

In addition, in another embodiment, the first and second codewords selecting module 71 may select corresponding codewords as the first codeword and the second codeword suitable for the 3D channel from the first codebook and the second codebook respectively, in conjunction with the estimated channel matrix and the precoding matrix index information reported by the UE. For example, when the precoding matrix index information reported by the UE only includes hMPI, the first and second codewords selecting module 71 selects the second codeword from the second codebook based on hPMI, and the base station selects the first codeword from the first codebook based on the estimated channel matrix according to the method mentioned above. In addition, when the precoding matrix index information reported by the UE includes vPMI and hPMI, the first and second codewords selecting module 71 may still select corresponding codewords from the first codebook and the second codebook based on the channel matrix with reference to the vPMI and hPMI.

Next, a module 72 configured to generate a precoder (T) for the 3D channel based on the product of the first codeword ($\mathbf{V}_V$) and the second codeword ($\mathbf{V}_H$) (hereinafter referred to as a precoder generating module 72) generates a precoder (T) for the 3D channel based on a product of the first codeword ($\mathbf{V}_V$) and the second codeword ($\mathbf{V}_H$). Specifically, the precoder generating module 72 first multiples $\mathbf{V}_V$ by $\mathbf{V}_H$. As mentioned above, the size of the first codeword ($\mathbf{V}_V$) is [$NM \times M$] and the size of the second codeword ($\mathbf{V}_H$) is [$M \times 2P$], wherein $N$ denotes the number of vertical antenna ports, $M$ denotes the number of horizontal antenna ports, and $P$ denotes the number of columns of matrix X used by the second codebook. Therefore, the product of $\mathbf{V}_V$ and $\mathbf{V}_H$ is $\mathbf{V}_V\mathbf{V}_H$, with a size of [$NM \times 2P$], i.e., a matrix having $N \times M$ rows and $2P$ columns. Then, the precoder generating module 72 selects r columns from $\mathbf{V}_V\mathbf{V}_H$ as the precoder (T), where r denotes the number of streams. In one embodiment, the precoder generating module 72 may select r columns as the precoder (T) from the $2P$ columns according to for example a maximum throughput criterion. In another embodiment, the precoder generating module 72 may multiply $\mathbf{V}_V\mathbf{V}_H$ by a predetermined fixed codeword that is a matrix having $2P$ rows and r columns, thereby selecting r columns in $\mathbf{V}_V\mathbf{V}_H$ as the precoder (T). Because the first codeword ($\mathbf{V}_V$) may indicate the downtilt angle of the formed beam, and the second codeword ($\mathbf{V}_H$) may indicate the azimuth angle of the formed beam, a set of beams may be formed based on the generated precoder (T), the set of beams having the down-tile angle indicated by $\mathbf{V}_V$ and the azimuth angle indicated by $\mathbf{V}_H$.

In a preferred embodiment, after the first and second codewords selecting module 71 has selected the first codeword ($\mathbf{V}_V$) and the second codeword ($\mathbf{V}_H$) according to the method above, a module 74 (not shown) configured to select a third codeword ($\mathbf{V}_S$) suitable for the 3D channel from a third codebook based on the channel information and a number of streams corresponding to the channel (hereinafter referred to as a third codeword selecting module 74) may further select a third codeword ($\mathbf{V}_S$) suitable for the 3D channel from a third codebook based on the channel information and a the number of streams corresponding to the channel. And then the precoder generating module 72 generates a precoder (T) for the 3D channel based on a product of $\mathbf{V}_V$, $\mathbf{V}_H$, and $\mathbf{V}_S$. In an embodiment, when the channel information is a channel matrix, the third codeword selecting module 74 selects the third codeword ($\mathbf{V}_S$) suitable for the 3D channel from the third codebook based on the channel matrix and the number of streams corresponding to the channel according to for example a maximum throughput criterion. As mentioned above, the size of $\mathbf{V}_S$ is [$2P \times r$], wherein $P$ is the number of columns of the matrix X used by the second codebook, and r is the number of streams. In another embodiment, when the precoding matrix index information reported by the UE includes the third precoding matrix index (sPMI) indicating the third codeword ($V_S$) selected by the UE, the base station selects a corresponding codeword as the third codeword $\mathbf{V}_S$ suitable for the 3D channel from the third codebook according to sPMI.

Next, the precoder generating module 72 generates a precoder (T) for the 3D channel based on a product of $\mathbf{V}_V$, $\mathbf{V}_H$, and $\mathbf{V}_S$. Specifically, the precoder generating module 72 first multiplies $\mathbf{V}_V$ by $\mathbf{V}_H$, resulting in $\mathbf{V}_V\mathbf{V}_H$ with a size of [$NM \times 2P$], as mentioned above. Then, the precoder generating module 72 multiplies $\mathbf{V}_V\mathbf{V}_H$ by $\mathbf{V}_S$, resulting in $\mathbf{V}_V\mathbf{V}_H\mathbf{V}_S$ with a size of [$NM \times r$] because the value of $\mathbf{V}_S$ is [$2P \times r$], where r denotes the number of streams. The precoder generating module 72 uses $\mathbf{V}_V\mathbf{V}_H\mathbf{V}_S$ as the precoder (T), which is a matrix having $N \times M$ rows and r columns. Because the first codeword ($\mathbf{V}_V$) may indicate the downtilt angle of the formed beam, and the second codeword ($\mathbf{V}_H$) may indicate an azimuth angle of the formed beam, a set of beams may be formed based on the generated precoder (T), the set of beams having the downtilt angle indicated by $\mathbf{V}_V$ and the azimuth angle indicated by $\mathbf{V}_H$.

In another embodiment, the precoder generating module 72 may generate a precoder for a 2D channel using the codebook provided by the present disclosure. Particularly, the Precoder generating module 72 may select a second codeword $\mathbf{V}_H$ of a size of [$M \times 2P$] from the second codebook according to the manner mentioned above based on the horizontal plane channel information or hPMI, and then uses the r column therein as the precoder (T) for the 2D channel according to for example a maximum throughput criterion. In another example, the first and second codewords selecting module 71 may select the second codeword $\mathbf{V}_H$ from the second codebook according to the manner mentioned above based on the horizontal plane channel information or hPMI and the third codeword selecting module 74 selects the third codeword $\mathbf{V}_S$ of a size of [$2P \times r$] from the third codeword, and then the precoder generating module 74 multiplies $\mathbf{V}_H$ by $\mathbf{V}_S$ to obtain $\mathbf{V}_H\mathbf{V}_S$ with a size of [$M \times r$] as the precoder (T) for the 2D channel. It is seen that the codebook provided by the present disclosure may also be applied to traditional 2D channels besides to the 3D channels.

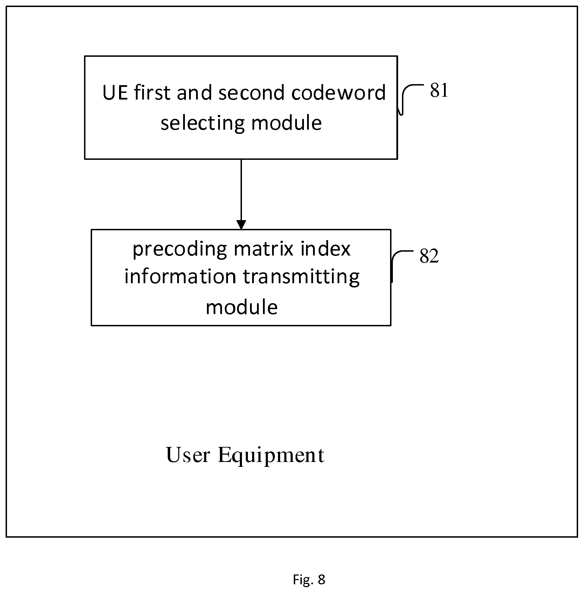

Fig. 8 illustrates a schematic diagram of an apparatus for facilitating generation of a precoder for the codebook mentioned above in a UE in wireless communication according to an embodiment of a still yet further aspect of the present disclosure.

A module 81 in a UE, configured to selects, based on channel information, a first codeword ($\mathbf{V}_V$) and/or a second codeword ($\mathbf{V}_H$) suitable for the channel from a first codebook and/or a second codebook, respectively (hereinafter referred to as a UE first and second codeword selecting module 81) selects, based on channel information, a first codeword ($\mathbf{V}_V$) and/or a second codeword ($\mathbf{V}_H$) suitable for the channel from a first codebook and/or a second codebook, respectively. Specifically, the first and second codeword selecting module 81 may perform channel estimation according to a received reference signal so as to derive a channel matrix, and then selects the codewords suitable for the channel from the codebooks based on the channel matrix according to a certain selection criterion.

In one embodiment, the UE is configured with a reference signal for a vertical antenna port; then the UE may estimate the vertical plane channel matrix based on the reference signal and selects the first codeword ($\mathbf{V}_V$) suitable for the channel from the first codebook according to for example a maximum throughput criterion. The first codeword ($\mathbf{V}_V$) may be used to indicate a downtilt angle of a beam pointed to the UE.

In another embodiment, the UE is configured with a reference signal for a horizontal antenna port; then the first and second codeword selecting module 81 estimates the horizontal plane channel matrix based on the reference signal, and selects a second codeword ($\mathbf{V}_H$) suitable for the channel from the second codebook according to for example a maximum throughput principle. The second codeword ($\mathbf{V}_H$) may be used to indicate the azimuth angle of the beam pointed to the UE.

In a further embodiment, the UE is configured with two sets of reference signals for a vertical antenna port and a horizontal antenna port, respectively; then the first and second codeword selecting module 81 may estimate the vertical plane channel matrix and the horizontal plane channel matrix based on the two sets of reference signals, respectively, and then select the first codeword ($V_V$) suitable for the channel from the first codebook and select the second codeword ($\mathbf{V}_H$) suitable for the channel from the second codebook according to for example a maximum throughput criterion. Moreover, the first codeword ($V_V$) may indicate the downtilt angle of the beam pointed to the UE, and the second codeword ($\mathbf{V}_H$) may indicate the azimuth angle of the beam pointed to the UE.

In one preferred embodiment, a module 83 (not shown) in a UE, configured to select a third codeword ($\mathbf{V}_S$) suitable for the channel from the third codebook based on channel information and the number of streams corresponding to the channel (hereinafter referred to as a UE third codeword selecting module 83) may further select a third codeword ($\mathbf{V}_S$) suitable for the channel from the third codebook based on channel information and a number of streams corresponding to the channel. For example, the UE third codeword selecting module 83 obtains a vertical plane channel matrix and/or a horizontal plane channel matrix based on the reference signals for the vertical antenna port and/or the horizontal antenna port. Then, the UE third codeword selecting module 83 selects the third codeword ($\mathbf{V}_S$) suitable for the channel from the third codebook based on the channel matrix and the number of streams corresponding to the cannel according to for example a maximum throughput criterion.

Then, a module 82 configured to transmit precoding matrix index information to a base station, the precoding matrix index information including a first precoding matrix index (vPMI) indicating the selected first codeword ($\mathbf{V}_V$) and/or a second precoding matrix index (hPMI) indicating the selected second codeword ($\mathbf{V}_H$) (hereinafter referred to as a precoding matrix index information transmitting module 82) transmits precoding matrix index information to a base station, the precoding matrix index information including a first precoding matrix index information (vPMI) indicating the selected first codeword ($\mathbf{V}_V$) and/or a second precoding matrix index information (hPMI) indicating the selected second codeword ($\mathbf{V}_H$). Moreover, in one preferred embodiment, the precoding matrix index information transmitted by the precoding matrix index information transmitting module 82 to the base station further includes a third precoding matrix index information (sPMI) indicating the selected third codeword ($\mathbf{V}_S$).

In one embodiment, the precoding matrix index information transmitting module 82 transmits, to the base station, respective precoding matrix index information indicating respective selected codeword in the same subframe. Particularly, the respective precoding matrix index information may include one or more of the vPMI, hPMI, and sMPI; moreover, the frequency of transmitting the precoding matrix index by the precoding matrix index information transmitting module 82 may be adjusted according to actual system needs.

In another embodiment, the precoding matrix index information transmitting module 82 transmits, to the base station, respective precoding matrix index information of respective selected codewords in a plurality of subframes. Particularly, the respective precoding matrix index information may include one or more of the vPMI, hPMI, and sMPI mentioned above. Moreover, in each subframe of the plurality of subframes, the precoding matrix index information transmitting module 82 may transmit one or more precoding matrix index information. For example, the precoding matrix index information transmitting module 82 may transmit vPMI in the $n^{th}$ subframe, and transmit hPMI and sPMI in the $m^{th}$ subframe. For another example, the precoding matrix index information transmitting module 82 may transmit vPMI, hPMI, and sPMI in three different subframes, respectively. Moreover, in a preferred embodiment, the precoding matrix index information transmitting module 82 may transmit respective precoding matrix index with the same frequency or with different frequencies. For example, hPMI may be transmitted more frequently by the UE. For another example, because the third codeword is for reflecting short-term channel information while the first and second codewords are for reflecting long-term channel information, sPMI may be transmitted more frequently by the UE than vPMI and hPMI. Frequencies of transmitting respective precoding matrix index may be adjusted according to actual system needs.

It should be noted that the present disclosure may be implemented in software and/or a combination of software and hardware. For example, each module of the present disclosure may be implemented by an application-specific integrated circuit (ASIC) or any other similar hardware device. In one embodiment, the software program of the present disclosure may be executed through a processor to implement the steps or functions as mentioned above. Likewise, the software program (including relevant data structure) of the present disclosure may be stored in a computer readable recording medium, e.g., RAM memory, magnetic or optic driver or soft floppy or similar devices. Additionally, some steps or functions of the present disclosure may be implemented by hardware, for example, a circuit cooperating with the processor so as to implement various steps or functions.

Further, a portion of the present disclosure may be applied as a computer program product, for example, a computer program instruction, which, when executed by the computer, may invoke or provide a method and/or technical solution according to the present disclosure through operations of the computer. Further, the program instruction invoking the method of the present disclosure may be stored in a fixed or mobile recording medium, and/or transmitted through broadcast or data flow in other signal bearer media, and/or stored in a working memory of a computer device which operates based on the program instruction. Here, in an embodiment according to the present disclosure, an apparatus comprises a memory for storing a computer program instruction and a processor for executing the program instruction, wherein when the computer program instruction is executed by the processor, the apparatus is triggered to run the methods and/or technical solutions according to a plurality of embodiments of the present disclosure.

To those skilled in the art, it is apparent that the present disclosure is not limited to the details of the above exemplary embodiments, and the present disclosure may be implemented with other embodiments without departing from the spirit or basic features of the present disclosure. Thus, in any way, the embodiments should be regarded as exemplary, not limitative; the scope of the present disclosure is limited by the appended claims, instead of the above depiction. Thus, all variations intended to fall into the meaning and scope of equivalent elements of the claims should be covered within the present disclosure. No reference signs in the claims should be regarded as limiting the involved claims. Besides, it is apparent that the term "comprise" does not exclude other units or steps, and singularity does not exclude plurality. A plurality of units or modules stated in a system claim may also be implemented by a single unit or module through software or hardware. Terms such as the first and the second are used to indicate names, but do not indicate any particular sequence.

## Claims

1.  A method for generating a codebook for wireless communication, wherein the codebook includes a first codebook and a second codebook, the method comprising:

- determining a first codebook ($V_V$) according to the equation below:

$$V_V = \left\{ \mathbf{V}_V^{(l)} : 1 \leq l \leq L \right\},$$

wherein

$$\mathbf{V}_V^{(l)} = \begin{bmatrix} \beta_1 \mathbf{z}_l & & \mathbf{0} \\ & \ddots & \\ \mathbf{0} & & \beta_M \mathbf{z}_l \end{bmatrix}, \beta_m \in [0, 2\pi),$$

and wherein $L$ denotes the number of codewords in the first codebook ($V_V$), $M$ denotes the number of horizontal antenna ports, $N$ denotes the number of vertical antenna ports, $\mathbf{z}_l$ denotes the $l^{th}$ column in any existing codebook $Z$ for wireless communication, the size of $Z$ being $N$ rows and $L$ columns;

- determining a second codebook ($V_H$) according to the equation below: wherein,

$$V_H = \left\{ \mathbf{V}_H^{(k)} : 1 \leq k \leq K \right\},$$

$$\mathbf{V}_H^{(k)} = \begin{bmatrix} \mathbf{X}^{(k)} & \mathbf{0} \\ \mathbf{0} & \mathbf{X}^{(k)} \end{bmatrix},$$

$$\mathbf{X}^{(k)} = \begin{bmatrix} \mathbf{b}_{k \bmod K} & \mathbf{b}_{(k+1) \bmod K} & \cdots & \mathbf{b}_{(k+P-1) \bmod K} \end{bmatrix},$$

and wherein $K$ denotes the number of codewords in the second codebook ($V_H$), $M$ denotes the number of horizontal antenna ports, $P$ denotes the number of columns of matrix $X$, and $\mathbf{b}_k$ denotes the $k^{th}$ column of matrix $B$, wherein the matrix $B$ is:

$$[\mathbf{B}]_{m,k} = e^{j2\pi \frac{(m-1)(k-1)}{K}}, \ m=1, ..., M/2; \ k=1, ..., K.$$

2. The method according to claim 1, wherein the codebook for wireless communication further includes a third codebook ($\mathbf{V}_S$), the method further comprising:

- determining the third codebook ($\mathbf{V}_S$) according to the equation below:

$$V_S = \left\{ \mathbf{V}_S^{(q)} = \frac{1}{\sqrt{2r}} \begin{bmatrix} \mathbf{Y}_1 & \cdots & \mathbf{Y}r \\ \alpha_1 \mathbf{Y}_1 & \cdots & \alpha_r \mathbf{Y}r \end{bmatrix} : 1 \leq q \leq Q, \alpha_i \in \{1, -1, j, -j\}, 1 \leq i \leq r \right\},$$

$$\mathbf{Y}_i \in \left\{ e_1^P \quad e_2^P \quad \cdots \quad e_P^P \right\},$$

wherein, and wherein $Q$ denotes the number of codewords in the third codebook ($\mathbf{V}_S$), $P$ is the number of columns of matrix $X$ used by the second codebook, $r$ denotes the number of streams, $e_s^t$ denotes a vector having $t$ elements, wherein the $s^{th}$ elements is 1 while the remaining elements are 0.

3. A method of generating a precoder for a 3D channel in a base station in wireless communication, **characterized by** performing steps below using a codebook generated by the method according to claim 1 or 2:

- selecting a first codeword ($V_V$) and a second codeword ($\mathbf{V}_H$) suitable for the 3D channel from a first codebook and a second codebook based on channel information of the 3D channel, respectively;
- generating a precoder (T) for the 3D channel based on a product of the first codeword ($\mathbf{V}_V$) and the second codeword ($\mathbf{V}_H$).

4. The method according to claim 3, further comprising:

- selecting a third codeword ($\mathbf{V}_S$) suitable for the 3D channel from a third codebook based on the channel information and the number of streams corresponding to the channel;

and wherein the step of generating a precoder (T) for the 3D channel based on a product of the first codeword ($V_V$) and the second codeword ($\mathbf{V}_H$) comprises:

- generating a precoder (T) for the 3D channel based on a product of the first codeword ($\mathbf{V}_V$), the second codeword ($\mathbf{V}_H$), and the third codeword ($\mathbf{V}_S$).

5. The method according to claim 3 or claim 4, wherein the channel information includes precoding matrix index information transmitted by a user equipment, the method further comprising:

- receiving precoding matrix index information from the user equipment, the precoding matrix index information including a first precoding matrix index indicating a selected first codeword ($V_V$) and a second precoding matrix index indicating a selected second codeword ($\mathbf{V}_H$).

6. The method according to claim 5, wherein the precoding matrix index information received from the user equipment further comprises a third precoding matrix index from the user equipment which indicates a selected third codeword ($\mathbf{V}_S$).

7. The method according to claim 5 or 6, wherein the step of receiving precoding matrix index information from the user equipment comprises receiving respective precoding matrix index from the user equipment in any one of the following manners:

- receiving respective precoding matrix index from the user equipment in a same subframe;
- receiving respective precoding matrix index from the user equipment in a plurality of subframes.

8. A method of facilitating generation of a precoder in a user equipment in wireless communication, **characterized by** performing steps below using a codebook generated by the method of claim 1 or 2:

- selecting, based on channel information, a first codeword ($\mathbf{V}_V$) and/or a second codeword ($\mathbf{V}_H$) suitable for the channel from a first codebook and/or a second codebook, respectively;
- transmitting precoding matrix index information to a base station, the precoding matrix index information including a first precoding matrix index indicating a selected first codeword ($\mathbf{V}_V$) and/or a second precoding matrix index indicating a selected second codeword ($\mathbf{V}_H$).

9. The method according to claim 8, further comprising:

- selecting a third codeword ($\mathbf{V}_S$) suitable for the channel based on the channel information and the number of streams corresponding to the channel;

and wherein the precoding matrix index information transmitted to the base station further includes a third precoding matrix index indicating a selected third codeword ($\mathbf{V}_S$).

10. The method according to claim 8 or 9, wherein the step of transmitting precoding matrix index information to a base station comprises transmitting respective precoding matrix index to the base station in any one of the following manners:

- transmitting precoding matrix index indicating each selected codeword to the base station in a same subframe;
- transmitting precoding matrix index indicating each selected codeword to the base station in a plurality of subframes.

11. An apparatus for generating a codebook for wireless communication, wherein the codebook includes a first codebook and a second codebook, the apparatus comprising:

- a module configured to determine a first codebook ($V_V$) according to the equation below:

$$V_V = \left\{ \mathbf{V}_V^{(l)} : 1 \leq l \leq L \right\},$$

wherein

$$\mathbf{V}_V^{(l)} = \begin{bmatrix} \beta_1 \mathbf{z}_l & & \mathbf{0} \\ & \ddots & \\ \mathbf{0} & & \beta_M \mathbf{z}_l \end{bmatrix}, \beta_m \in [0, 2\pi),$$

and wherein $L$ denotes the number of codewords in the first codebook ($V_V$), $M$ denotes the number of horizontal antenna ports, $N$ denotes the number of vertical antenna ports, $\mathbf{z}_l$ denotes the $l^{th}$ column in any existing codebook $Z$ for wireless communication, the size of $Z$ being $N$ rows and $L$ columns;

- a module configured to determine a second codebook ($V_H$) according to the equation below:

$$V_H = \left\{ \mathbf{V}_H^{(k)} : 1 \leq k \leq K \right\},$$

wherein,

$$\mathbf{V}_H^{(k)} = \begin{bmatrix} \mathbf{X}^{(k)} & \mathbf{0} \\ \mathbf{0} & \mathbf{X}^{(k)} \end{bmatrix},$$

$$\mathbf{X}^{(k)} = \begin{bmatrix} \mathbf{b}_{k \bmod K} & \mathbf{b}_{(k+1) \bmod K} & \cdots & \mathbf{b}_{(k+P-1) \bmod K} \end{bmatrix},$$

and wherein $K$ denotes the number of codewords in the second codebook ($V_H$), $M$ denotes the number of horizontal antenna ports, $P$ denotes the number of columns of matrix $X$, and $\mathbf{b}_k$ denotes the $k^{th}$ column of matrix $B$, wherein the matrix $B$ is:

$$[\mathbf{B}]_{m,k} = e^{j2\pi \frac{(m-1)(k-1)}{K}}, m=1, ..., M/2; k=1, ..., K.$$

12. The apparatus according to claim 11, wherein the codebook for wireless communication further includes a third codebook ($\mathbf{V}_S$), the apparatus further comprising:

- a module configured to determine the third codebook ($\mathbf{V}_S$) according to the equation below:

$$V_s = \left\{ \mathbf{V}_S^{(q)} = \frac{1}{\sqrt{2r}} \begin{bmatrix} \mathbf{Y}_1 & \mathbf{Y}r \\ \alpha_1\mathbf{Y}_1 & \cdots & \alpha_r\mathbf{Y}r \end{bmatrix} : 1 \le q \le Q, \alpha_i \in \{1, -1, j, -j\}, 1 \le i \le r \right\},$$

wherein,

$$\mathbf{Y}_i \in \left\{ e_1^P \quad e_2^P \quad \cdots \quad e_P^P \right\},$$

and wherein $Q$ denotes the number of codewords in the third codebook ($\mathbf{V}_S$), $P$ is the number of columns of matrix $X$ used by the second codebook, $r$ denotes the number of streams, $e_s^t$ denotes a vector having $t$ elements, wherein the $s^{\text{th}}$ elements is 1 while the remaining elements are 0.

13. An apparatus for generating a precoder for a 3D channel in a base station in wireless communication, **characterized by** using a codebook generated by the method of claim 1 or 2, the apparatus comprising:

- a module configured to select a first codeword ($V_V$) and a second codeword ($\mathbf{V}_H$) suitable for the 3D channel from a first codebook and a second codebook based on channel information of the 3D channel, respectively;
- a module configured to generate a precoder (T) for the 3D channel based on a product of the first codeword ($\mathbf{V}_V$) and the second codeword ($\mathbf{V}_H$).

14. The apparatus according to claim 13, further comprising:

- a module configured to select a third codeword ($\mathbf{V}_S$) suitable for the 3D channel from the third codebook based on the channel information and the number of streams corresponding to the channel;

and wherein the module configured to generate a precoder for the 3D channel is further configured to:

- generate a precoder (T) for the 3D channel based on a product of the first codeword ($\mathbf{V}_V$), the second codeword ($\mathbf{V}_H$), and the third codeword ($\mathbf{V}_S$).

15. The apparatus according to claim 13 or claim 14, wherein the channel information includes precoding matrix index information transmitted by a user equipment, the apparatus further comprising:

- a module configured to receive precoding matrix index information from the user equipment, the precoding matrix index information including a first precoding matrix index indicating a selected first codeword ($V_V$) and a second precoding matrix index indicating a selected second codeword ($\mathbf{V}_H$).

16. The apparatus according to claim 15, wherein the precoding matrix index information received from the user equipment further comprises a third precoding matrix index from the user equipment which indicates a selected third codeword ($\mathbf{V}_S$).

17. The apparatus according to claim 15 or 16, wherein the module configured to receive precoding matrix index information from the user equipment receives precoding matrix index information from the user equipment in any one of the following manners:

- receiving respective precoding matrix index from the user equipment in a same subframe;
- receiving respective precoding matrix index from the user equipment in a plurality of subframes.

18. An apparatus for facilitating generation of a precoder in a user equipment in wireless communication, **characterized by** using a codebook generated by the method of claim 1 or 2, the apparatus comprising:

- a module configured to select, based on channel information, a first codeword ($V_V$) and/or a second codeword ($\mathbf{V}_H$) suitable for the channel from a first codebook and/or a second codebook, respectively;

**EP 3 179 643 A1**

- a module configured to transmit precoding matrix index information to a base station, the precoding matrix index information including a first precoding matrix index indicating a selected first codeword ($V_V$) and/or a second precoding matrix index indicating a selected second codeword ($\mathbf{V}_H$).

19. The apparatus according to claim 18, further comprising:

- a module configured to select a third codeword ($\mathbf{V}_S$) suitable for the channel based on the channel information and the number of streams corresponding to the channel;

and wherein the precoding matrix index information transmitted to the base station further includes a third precoding matrix index indicating a selected third codeword ($\mathbf{V}_S$).

20. The apparatus according to claim 18 or 19, wherein the module configured to transmit precoding matrix index information to a base station transmits respective precoding matrix index to the base station in any one of the following manners:

- transmitting precoding matrix index indicating each selected codeword to the base station in a same subframe;
- transmitting precoding matrix index indicating each selected codeword to the base station in a plurality of subframes.

**20**

Fig. 1

Fig. 2

determine a first codebook — S31

determine a second codebook — S32

Fig. 3

select a first codeword and a second codeword based on channel information ⌐ S41

generate a precoder based on the first codeword and the second codeword ⌐ S42

Fig. 4

select a first codeword and/or a second codeword based on channel information $\qquad$ S51

transmit precoding matrix index information indicating the selected codeword to a base station $\qquad$ S52

Fig. 5

first codebook determining module ⌐ 61

↓

second codebook determining module ⌐ 62

Codebook Generating
Apparatus

Fig. 6

first and second codewords
selecting module — 71

precoder generating module — 72

Base Station

Fig. 7

```
┌─────────────────────────────────────────────────────────┐
│                                                         │
│      ┌──────────────────────────────┐                   │
│      │  UE first and second codeword │ ⌐ 81             │
│      │       selecting module        │                   │
│      └──────────────────────────────┘                   │
│                      │                                  │
│                      ▼                                  │
│      ┌──────────────────────────────┐                   │
│      │   precoding matrix index      │ ⌐ 82             │
│      │   information transmitting     │                   │
│      │          module                │                   │
│      └──────────────────────────────┘                   │
│                                                         │
│                                                         │
│              User Equipment                             │
│                                                         │
└─────────────────────────────────────────────────────────┘
```

Fig. 8

# INTERNATIONAL SEARCH REPORT

| International application No. |
|---|
| PCT/CN2014/084022 |

## A. CLASSIFICATION OF SUBJECT MATTER

H04B 7/06 (2006.01) i

According to International Patent Classification (IPC) or to both national classification and IPC

## B. FIELDS SEARCHED

Minimum documentation searched (classification system followed by classification symbols)

H04B; H04W; H04Q

Documentation searched other than minimum documentation to the extent that such documents are included in the fields searched

Electronic data base consulted during the international search (name of data base and, where practicable, search terms used)

WPI, EPODOC, CNKI, CNPAT, IEEE: three-dimensional, multi-input multi-output, 3d, mimo, first codebook, second codebook, horizontal, vertical, antenna, port

## C. DOCUMENTS CONSIDERED TO BE RELEVANT

| Category* | Citation of document, with indication, where appropriate, of the relevant passages | Relevant to claim No. |
|---|---|---|
| A | CN 102938662 A (ALCATEL-LUCENT SHANGHAI BELL CO., LTD.), 20 February 2013 (20.02.2013), the whole document | 1-20 |
| A | CN 103427893 A (XIDIAN UNIVERSITY), 04 December 2013 (04.12.2013), the whole document | 1-20 |
| A | CN 103220026 A (CHINA MOBILE COMMUNICATIONS CORPORATION), 24 July 2013 (24.07.2013), the whole document | 1-20 |
| A | US 2014177683 A1 (MOTOROLA MOBILITY LLC), 26 June 2014 (26.06.2014), the whole document | 1-20 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 April 2015 (22.04.2015) | 12 May 2015 (12.05.2015) |

| Name and mailing address of the ISA/CN: <br> State Intellectual Property Office of the P. R. China <br> No. 6, Xitucheng Road, Jimenqiao <br> Haidian District, Beijing 100088, China <br> Facsimile No.: (86-10) 62019451 | Authorized officer <br><br> TANG, Guangqiang <br><br> Telephone No.: (86-10) 62413419 |

Form PCT/ISA/210 (second sheet) (July 2009)

## EP 3 179 643 A1

### INTERNATIONAL SEARCH REPORT
Information on patent family members

| International application No. |
| --- |
| **PCT/CN2014/084022** |

| Patent Documents referred in the Report | Publication Date | Patent Family | Publication Date |
| --- | --- | --- | --- |
| CN 102938662 A | 20 February 2013 | WO 2013024351 A1 | 21 February 2013 |
| | | US 2014177749 A1 | 26 June 2014 |
| | | KR 20140049063 A | 24 April 2014 |
| | | TW 201318368 A | 01 May 2013 |
| | | JP 2014529937 A | 13 November 2014 |
| | | EP 2745428 A1 | 25 June 2014 |
| CN 103427893 A | 04 December 2013 | None | |
| CN 103220026 A | 24 July 2013 | WO 2013107377 A1 | 25 July 2013 |
| US 2014177683 A1 | 26 June 2014 | US 8942302 B2 | 27 January 2015 |
| | | WO 2014099343 A1 | 26 June 2014 |

Form PCT/ISA/210 (patent family annex) (July 2009)

29